(19) **Europäisches Patentamt / European Patent Office / Office européen des brevets**

(11) **EP 3 858 875 B1**

(12) **EUROPEAN PATENT SPECIFICATION**

(45) Date of publication and mention
of the grant of the patent:
**24.09.2025 Bulletin 2025/39**

(21) Application number: **19865491.5**

(22) Date of filing: **27.09.2019**

(51) International Patent Classification (IPC):
**C08F 214/26** (2006.01)    **C08F 210/06** (2006.01)
**C08F 216/14** (2006.01)    **C08F 214/22** (2006.01)

(52) Cooperative Patent Classification (CPC):
(C-Sets available)
**C08F 214/265; C08F 210/06; C08F 214/222;**
C08F 214/262; C08F 216/1408                        (Cont.)

(86) International application number:
**PCT/JP2019/038322**

(87) International publication number:
**WO 2020/067492 (02.04.2020 Gazette 2020/14)**

(54) **FLUORINE-CONTAINING COPOLYMER AND METHOD FOR PRODUCING SAME**

FLUORINHALTIGES COPOLYMER UND HERSTELLUNGSVERFAHREN DAFÜR

COPOLYMÈRE CONTENANT DU FLUOR ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2018   JP 2018184229**

(43) Date of publication of application:
**04.08.2021   Bulletin 2021/31**

(73) Proprietor: **AGC INC.**
**Chiyoda-ku,**
**Tokyo 1008405 (JP)**

(72) Inventors:
• **YASUDA, Satoko**
 **Tokyo 100-8405 (JP)**
• **KOSE, Takehiro**
 **Tokyo 100-8405 (JP)**
• **HATTORI, Yukiko**
 **Tokyo 100-8405 (JP)**
• **YONEDA, Toshikazu**
 **Tokyo 100-8405 (JP)**

(74) Representative: **Müller-Boré & Partner**
**Patentanwälte PartG mbB**
**Friedenheimer Brücke 21**
**80639 München (DE)**

(56) References cited:
| | |
|---|---|
| **EP-A1- 0 446 725** | **EP-A2- 1 304 341** |
| **WO-A1-00/11050** | **WO-A1-2007/085545** |
| **WO-A1-2012/084587** | **JP-A- 2003 160 616** |
| **JP-A- 2003 160 616** | **JP-A- 2013 545 860** |
| **JP-A- 2013 545 860** | **JP-A- H05 222 130** |
| **JP-A- H05 222 130** | **US-A- 4 694 045** |

EP 3 858 875 B1

(52)   Cooperative Patent Classification (CPC): (Cont.)

C-Sets
**C08F 214/222, C08F 214/28, C08F 216/1416;
C08F 214/222, C08F 216/1416;
C08F 214/265, C08F 210/06, C08F 216/1416**

**Description**

TECHNICAL FIELD

The present invention relates to a fluorinated copolymer and a method for producing it.

BACKGROUND ART

Fluororubbers, which are excellent in heat resistance, chemical resistance, oil resistance, weather resistance, etc., are suitable for use in severe environment in which general purpose rubbers cannot be used.

As fluororubbers, for example, a copolymer (FKM) having units based on vinylidene fluoride and units based on hexafluoropropylene, and a copolymer (FEPM) having units based on tetrafluoroethylene and units based on propylene have been known.

In order that the fluororubbers are used at low temperature, improvement in physical properties of the fluororubbers at low temperature (hereinafter sometimes referred to as low temperature properties) is required.

As FEPM the low temperature properties of which are improved, the following has been proposed.

A fluorinated copolymer having at least 50 mol% and less than 60 mol% of units based on tetrafluoroethylene, at least 10 mol% and less than 40 mol% of units based on propylene, and at least 10 mol% and less than 40 mol% of units based on $CH_2=CHO(CH_2)_m(CF_2)_nF$ (wherein m is 2, and n is 5 or 6), and having a glass transition temperature of from -30 to -7°C (Patent Document 1). In this context, Patent Document 2 relates to VDF fluoroelastomers having a glass transition temperature between -10°C and -35°C, preferably from -20°C to -34°C, still more preferably between -25°C and -34°C, showing an improved combination of chemical resistance, mechanical properties and compression set in a wide range of temperatures.

PRIOR ART DOCUMENTS

PATENT DOCUMENTS

| | |
|---|---|
| Patent Document 1: | JP 5 407 180 B2 |
| Patent Document 2: | WO 2007/085545 A1 |

DISCLOSURE OF INVENTION

TECHNICAL PROBLEM

A fluororubber is used usually in the form of a crosslinked product obtained by crosslinking a composition having a crosslinking agent, a crosslinking aid, etc., blended with the fluororubber, for the purpose of improving mechanical properties (such as tensile strength and compression set at high temperature), etc. However, the fluorinated copolymer disclosed in Patent Document 1, which has no crosslinking moiety, for example iodine atoms, is problematic in crosslinking property.

In order to improve crosslinking property of a fluorinated copolymer, introduction of iodine atoms to the fluorinated copolymer by using a chain transfer agent containing an iodine atom at the time of polymerization of monomers constituting the fluorinated copolymer, is considered. However, if a chain transfer agent containing an iodine atom is used at the time of polymerization of monomers constituting the fluorinated copolymer as described in Patent Document 1, $CH_2=CHO(CH_2)_m(CF_2)_nF$ tends to hardly be copolymerized, and the obtainable fluorinated copolymer thereby tends to be insufficient in low temperature properties.

The present invention provides a fluorinated copolymer excellent in low temperature properties and crosslinking property as a fluororubber, and a method for producing it.

SOLUTION TO PROBLEM

The present invention provides the fluorinated copolymer and its production method as defined in the appended claims.

ADVANTAGEOUS EFFECTS OF INVENTION

The fluorinated copolymer of the present invention is excellent in low temperature properties and crosslinking property as a fluororubber.

According to the method for producing a fluorinated copolymer of the present invention, it is possible to produce a fluorinated copolymer excellent in low temperature properties and crosslinking property as a fluororubber.

DESCRIPTION OF EMBODIMENTS

In this specification, meanings of the following terms are as follows.

A "monomer" means a compound having a polymerizable unsaturated bond. The polymerizable unsaturated bond may, for example, be a double bond or a triple bond between carbon atoms.

"Units based on a monomer" generally mean an atomic group directly formed by polymerization of one monomer molecule, and an atomic group obtained by chemical conversion of part of the atomic group. The units based on a monomer may sometimes be referred to as "monomer units".

A "terminal of a molecular chain" includes both the terminal of the main chain and the terminals of branches.

An "etheric oxygen atom" is an oxygen atom singly present between carbon atoms.

The "elastic shear modulus G'" is a value measured in accordance with ASTM D5289 and ASTM D6204 at a temperature of 100°C at an amplitude of 0.5° at a frequency of 50 per minute.

The "glass transition temperature" is a midpoint glass transition temperature measured by differential scanning calorimetry (DSC) in accordance with JIS K6240:2011 (corresponding international standards ISO 22768:2006).

(Copolymer 1)

The fluorinated copolymer of the present invention according to a first embodiment (hereinafter sometimes referred to as "copolymer 1") has units based on tetrafluoroethylene (hereinafter sometimes referred to as "TFE) (hereinafter sometimes referred to as "TFE units"), units based on propylene (hereinafter sometimes referred to as "P units") and units based on the compound 1 (hereinafter sometimes referred to as "compound 1 units"), and has either one or both of iodine atoms and bromine atoms. Compound 1 is $CF_2=CFOCF_2CF_2OCF_2OCF_2OCF_3$ and/or $CF_2=CFOCF_2CF_2OCF_2CF_2OCF_2CF_3$.

By having the compound 1 units as defined above, the copolymer 1 is excellent in low temperature properties.

By having the compound 1 units as defined above, the productivity of the copolymer 1 improves, and the copolymer 1 will be excellent in low temperature properties.

As the compound 1 the following compounds are used according to the present invention:

$CF_2=CFOCF_2CF_2OCF_2OCF_2OCF_3$ (hereinafter sometimes referred to as "C7-PEVE"), and/or
$CF_2=CFOCF_2CF_2OCF_2CF_2OCF_2CF_3$ (hereinafter sometimes referred to as "EEAVE").

Other useful compounds not according to the claimed invention are:

$$CF_2=CFOCF_2CF_2OCF_2CF_2OCF_2CF_2OCF_2CF_3,$$

$$CF_2=CFOCF_2CF(CF_3)OCF_2CF_2CF_3$$

(hereinafter sometimes referred to as "PHVE"),

$$CF_2=CFOCF_2CF_2OCF_3,$$

$$CF_2=CFOCF_2CF_2CF_2OCF_3,$$

$$CF_2=CFOCF_2CF_2OCF_2CF_3,$$

$$CF_2=CFOCF_2OCF_3,$$

$$CF_2=CFOCF_2OCF_2CF_3,$$

$$CF_2=CFOCF_2OCF_2CF_2OCF_3,$$

$$CF_2 =CFO(CF_2 CF(CF_3 )O)_2 CF_2 CF_2 CF_3,$$

and

$$CF_2 =CFOCF_2 OCF_2 OCF_3.$$

As the compound 1, in view of improvement in the productivity of the copolymer 1 and excellent low temperature properties of the copolymer 1, the compound 1 is C7-PEVE or EEAVE.

The compound 1 may be used alone or in combination of the two above-mentioned compounds.

The compound 1 may be prepared by using the corresponding alcohol as the raw material in accordance with the method disclosed in WO00/56694.

The copolymer 1 may have units based on a monomer other than TFE, propylene and the compound 1 (hereinafter sometimes referred to as "other monomer").

Other monomer may, for example, be a monomer having at least two polymerizable unsaturated bonds (hereinafter sometimes referred to as "DV"), perfluoro(alkyl vinyl ether) (hereinafter sometimes referred to as "PAVE"), hexafluoropropylene, vinylidene fluoride, chlorotrifluoroethylene, vinyl fluoride, pentafluoropropylene, perfluorocyclobutene, 2,3,3,3-tetrafluoropropene, (perfluoroalkyl)ethylene (such as $CH_2 =CHCF_3$, $CH_2 =CHCF_2 CF_3$, $CH_2 =CHCF_2 CF_2 CF_3$, $CH_2 =CHCF_2 CF_2 CF_2 CF_3$, or $CH_2 =CHCF_2 CF_2 CF_2 CF_2 CF_3$), an $\alpha$-olefin (such as ethylene, isobutylene or pentene), a vinyl ether (such as methyl vinyl ether, ethyl vinyl ether, propyl vinyl ether or butyl vinyl ether), a vinyl ester (such as vinyl acetate, vinyl propionate, vinyl butyrate, vinyl caproate or vinyl caprylate), a monomer having either one or both of a bromine atom and an iodine atom, a monomer having a nitrile group (such as $CF_2 =CFO(CF_2)_5 CN$ or perfluoro(8-cyano-5-methyl-3,6-dioxa-1-octene)).

As the monomer having either one or both of a bromine atom and an iodine atom, preferred is compound represented by the following formula 2 (hereinafter sometimes referred to as "compound 2"), or compound represented by the formula 3 (hereinafter sometimes referred to as "compound 3"):

$$CR^1 R^2 =CR^3 R^4 \qquad \text{formula 2}$$

$$CR^1 R^2 -R^5 -CR^3 R^4 \qquad \text{formula 3}$$

provided that the compound 2 and the compound 3 have at least one bromine atom or iodine atom.

$R^1$, $R^2$ and $R^3$ are each independently a hydrogen atom, a fluorine atom, a bromine atom or an iodine atom.

$R^4$ is an alkyl group, an alkyl group having one or more etheric oxygen atom, a fluoroalkyl group, or a fluoroalkyl group having one or more etheric oxygen atom. $R^4$ may have a bromine atom or an iodine atom. $R^4$ may be linear or branched.

$R^5$ is a group having at least one polymerizable unsaturated bond. The polymerizable unsaturated bond may be bonded to an alkyl group, an alkyl group having one or more etheric oxygen atom, a fluoroalkyl group, or a fluoroalkyl group having one or more etheric oxygen atom. $R^5$ may have a bromine atom or an iodine atom. $R^5$ may be linear or branched.

As the compound 2 and the compound 3, specifically, the following compounds may be mentioned.

Iodoethylene, 4-iodo-3,3,4,4-tetrafluoro-1-butene, 2-iodo-1,1,2,2-tetrafluoro-1-vinyloxyethane, 2-iodoethyl vinyl ether, allyl iodide, 1,1,2,3,3,3-hexafluoro-2-iodo-1-(perfluorovinyloxy)propane, 3,3,4,5,5,5-hexafluoro-4-iodopentene, iodotrifluoroethylene, 2-iodoperfluoro(ethyl vinyl ether), $CF_2 =CFOCF(CF_3 )CF_2 OCF_2 CF_2 CH_2 I$, $CF_2 =CFOCF_2 CF_2 CH_2 I$, and $CH_2 =CHCF_2 CF_2 I$.

Bromotrifluoroethylene, 4-bromo-3,3,4,4-tetrafluorobutene-1 (hereinafter sometimes referred to as "BTFB"), vinyl bromide, 1-bromo-2,2-difluoroethylene, perfluoroallyl bromide, 4-bromo-1,1,2-trifluorobutene-1, 4-bromo-1,1,3,3,4,4-hexafluorobutene, 4-bromo-3-chloro-1,1,3,4,4-pentafluorobutene, 6-bromo-5,5,6,6-tetrafluorohexene, 4-bromoperfluorobutene-1, 3,3-difluoroallyl bromide, 2-bromo-perfluoroethyl perfluorovinyl ether, $CF_2 =CFOCF_2 CF_2 CF_2 OCF_2 CF_2 Br$, $CF_2 BrCF_2 O-CF=CF_2$, $CH_3 OCF=CFBr$, and $CF_3 CH_2 OCF=CFBr$.

3-bromo-4-iodoperfluorobutene-1, 2-bromo-4-iodoperfluorobutene-1.

As the compound 2, BTFB is preferred.

Other monomer may be used alone or in combination of two or more.

As other monomer, preferred is DV or PAVE, and more preferred is DV.

When the copolymer 1 has units based on DV (hereinafter sometimes referred to as "DV units"), the copolymer 1 will be more excellent in crosslinking property, and the crosslinked product of the copolymer 1 will be more excellent in mechanical properties.

The polymerizable unsaturated bond in DV may, for example, be a double bond or a triple bond between carbon atoms, and is preferably a double bond. The number of the polymerizable unsaturated bonds in DV is preferably from 2 to 6, more preferably 2 or 3, further preferably 2.

As DV, preferred is at least one member selected from the group consisting of compound represented by the formula 4 (hereinafter sometimes referred to as "compound 4"), compound represented by the formula 5 (hereinafter sometimes referred to as "compound 5"), and compound represented by the formula 6 (hereinafter sometimes referred to as "compound 6").

$$CR^6 R^7 =CR^8 -R^9 -CR^{10} =CR^{11} R^{12} \qquad \text{formula 4}$$

$$CR^{13} R^{14} =CR^{15} -OC(O)-R^{16} -C(O)O-CR^{17} =CR^{18} R^{19} \qquad \text{formula 5}$$

$$CR^{20} R^{21} =CR^{22} -C(O)O-CH=CH_2 \qquad \text{formula 6}$$

$R^6$, $R^7$, $R^8$, $R^{10}$, $R^{11}$, $R^{12}$, $R^{13}$, $R^{14}$, $R^{15}$, $R^{17}$, $R^{18}$, $R^{19}$ and $R^{22}$ are each independently a hydrogen atom, a fluorine atom or a methyl group.

$R^9$ and $R^{16}$ are each independently a $C_{1-10}$ alkylene group, a $C_{1-10}$ alkylene group having one or more etheric oxygen atom, a $C_{1-10}$ fluoroalkylene group, or a $C_{1-10}$ fluoroalkylene group having one or more etheric oxygen atom.

$R^{20}$ and $R^{21}$ are each independently a hydrogen atom, a $C_{1-10}$ alkyl group, or a $C_{1-10}$ alkyl group having one or more etheric oxygen atom.

As the compound 4, a compound having, to both terminals of a $C_{1-10}$ alkylene group or fluoroalkylene group, a group independently selected from a vinyl group, an allyl group and a butenyl group bonded via or without one or more etheric oxygen atom, may be mentioned. As examples of the compound having one or more etheric oxygen atom, divinyl ether, allyl vinyl ether, butenyl vinyl ether, fluoro(divinyl ether), fluoro(allyl vinyl ether) and fluoro(butenyl vinyl ether) may be mentioned.

In the compound 4, with a view to improving the crosslinking property of the copolymer 1 and heat resistance of the crosslinked product of the copolymer 1, $R^6$, $R^7$, $R^8$, $R^{10}$, $R^{11}$ and $R^{12}$ are each independently preferably a fluorine atom or a hydrogen atom, and it is more preferred that all of $R^6$, $R^7$, $R^8$, $R^{10}$, $R^{11}$ and $R^{12}$ are fluorine atoms.

The alkylene group or the fluoroalkylene group as $R^9$ may be linear or branched and is preferably linear. The number of carbon atoms in $R^9$ is preferably from 2 to 8, more preferably from 3 to 7, further preferably from 3 to 6, particularly preferably from 3 to 5. The number of etheric oxygen atoms in $R^9$ is preferably from 0 to 3, more preferably 1 or 2. When $R^9$ is in such a preferred embodiment, the crosslinked product of the copolymer 1 will be more excellent in mechanical properties.

$R^9$ is, in view of heat resistance of the crosslinked product of the copolymer 1 and with a view to suppressing coloring, preferably a fluoroalkylene group, more preferably a perfluoroalkylene group.

As the compound 4, for example, the following compounds may be mentioned.

$$CH_2 =CHO(CH_2)_4 OCH=CH_2 ,$$

$$CF_2 =CFO(CF_2)_3 OCF=CF_2$$

(hereinafter sometimes referred to as "DVE-3"),

$$CF_2 =CFO(CF_2)_4 OCF=CF_2$$

(hereinafter sometimes referred to as "DVE-4"), and

$$CH_2 =CH(CF_2)_6 CH=CH_2 .$$

As the compound 5, for example, divinyl ester, allyl vinyl ester or butenyl vinyl ester may be mentioned.

In the compound 5, $R^{13}$, $R^{14}$, $R^{15}$, $R^{17}$, $R^{18}$ and $R^{19}$ are preferably hydrogen atoms.

As $R^{16}$, the same group as $R^9$ may be mentioned. The preferred range of the number of carbon atoms in $R^{16}$ is also the same as $R^9$. The number of etheric oxygen atoms in $R^{16}$ is preferably 0 or 1, more preferably 0.

As the compound 5, for example, divinyl adipate may be mentioned.

In the compound 6, $R^{21}$ and $R^{22}$ are preferably hydrogen atoms.

The compound 6 is preferably, for example, vinyl crotonate or vinyl methacrylate and is preferably vinyl crotonate.

As DV, in view of more excellent crosslinking property while maintaining mechanical properties of the crosslinked product of the copolymer 1, preferred is DVE-3 or DVE-4.

DV may be used alone or in combination of two or more.

As PAVE, for example, compound represented by the formula 7 (hereinafter sometimes referred to as "compound 7") may be mentioned.

$$CF_2 = CFOR^{f\,3} \qquad \text{formula 7}$$

wherein $R^{f\,3}$ is a $C_{1\text{-}10}$ perfluoroalkyl group.

The perfluoroalkyl group as $R^{f\,3}$ may be linear or branched. The number of carbon atoms in $R^{f3}$ is preferably from 1 to 8, more preferably from 1 to 6, further preferably from 1 to 5, particularly preferably from 1 to 3.

As the compound 7, for example, perfluoro(methyl vinyl ether), perfluoro(ethyl vinyl ether) or perfluoro(propyl vinyl ether) may be mentioned.

PAVE may be used alone or in combination of two or more.

The proportion of the TFE units, to the total number of moles of the TFE units, the P units and the compound 1 units, is preferably from 35 to 65 mol%, more preferably from 40 to 60 mol%, further preferably from 45 to 55 mol%.

The proportion of the P units, to the total number of moles of the TFE units, the P units and the compound 1 units, is preferably from 20 to 50 mol%, more preferably from 30 to 47 mol%, further preferably from 40 to 45 mol%.

When the proportions of the TFE units and the P units are within the above ranges, the copolymer 1 will be more excellent in mechanical properties, heat resistance, chemical resistance (alkali resistance or the like), oil resistance and weather resistance.

The proportion of the compound 1 units, to the total number of moles of the TFE units, the P units and the compound 1 units, is preferably from 2 to 15 mol%, more preferably from 3 to 13 mol%, further preferably from 5 to 12 mol%.

The proportion of the compound 1 units, to the total mass of the TFE units, the P units and the compound 1 units, is preferably from 10 to 50 mass%, more preferably from 8 to 45 mass%, further preferably from 5 to 40 mass%.

When the proportions of the compound 1 units in terms of mole and mass are at least the lower limit values of the above ranges, the copolymer 1 will be more excellent in low temperature properties. When the proportions of the compound 1 units in terms of mole and mass are at most the upper limit values of the above ranges, mechanical properties and the productivity will be excellent.

The total number of moles of the TFE units, the P units and the compound 1 units to all the units constituting the copolymer 1 is preferably from 50 to 100 mol%, more preferably from 60 to 100 mol%, further preferably from 70 to 100 mol%.

In a case where the copolymer 1 has the DV units, the proportion of the DV units to the total number of moles of the TFE units, the P units and the compound 1 units, is preferably from 0.1 to 1.0 mol%, more preferably from 0.15 to 0.8 mol%, further preferably from 0.2 to 0.6 mol%. When the proportion of the DV units is at least the lower limit value of the above range, the copolymer 1 will be excellent in crosslinking property, and the crosslinked product of the copolymer 1 will be more excellent in mechanical properties (such as tensile strength and compression set at high temperature). When the proportion of the DV units is at most the above upper limit value of the above range, while maintaining excellent physical properties of the crosslinked product of the copolymer 1, breakage when a stress such as bending is applied at high temperature is suppressed.

By having either one or both of iodine atoms and bromine atoms, the copolymer 1 will be excellent in crosslinking property. The iodine atoms or the bromine atoms are preferably bonded to the terminal of the molecular chain of the copolymer 1.

The total proportion of the iodine atoms and the bromine atoms is, to the mass of the copolymer 1, preferably from 0.01 to 5.00 mass%, more preferably from 0.03 to 2.00 mass%, further preferably from 0.05 to 1.00 mass%. When the total proportion of the iodine atoms and the bromine atoms is within the above range, the copolymer 1 will be more excellent in crosslinking property and mechanical property.

The glass transition temperature (hereinafter sometimes referred to as "Tg") of the copolymer 1 is a measure of the low temperature properties of the copolymer 1. Tg of the copolymer 1 is preferably at most -3°C, more preferably at most -5°C, further preferably at most -10°C. When Tg of the copolymer 1 is at most the upper limit value of the above range, the copolymer 1 will be more excellent in low temperature properties. Tg of the copolymer 1 is preferably as low as possible, and the lower limit is not particularly limited, and in view of processability and mechanical properties, Tg of the copolymer 1 is preferably at least -50°C.

It is preferred that the proportion (X1 mol%) of the compound 1 units to the total number of moles of the TFE units, the P units and the compound 1 units, and Tg (Y1 °C) of the copolymer 1, satisfy Y1/X1<-0.8, more preferably Y1/X15-1.0, further preferably Y1/X1≦-1.5.

Since Tg of a conventional FEPM (copolymer of TFE and propylene, TFE units: propylene units= 56:44) is substantially 0°C, Y1/X1≦-0.8 being satisfied means that by introducing 1 mol% of the compound 1 units to the conventional FEPM, Tg of the obtainable copolymer 1 is decreased by at least 0.8°C than the conventional FEPM, that is, the compound 1 is a compound effective to decrease Tg of the copolymer 1 by at least 0.8°C when 1 mol% thereof is introduced. As such a compound 1, C7-PEVE and/or EEAVE are used.

The elastic shear modulus G' of the copolymer 1 is preferably from 10 to 800 kPa, more preferably from 50 to 600 kPa, further preferably from 80 to 500 kPa. A higher elastic shear modulus G' means a higher molecular weight of the polymer and a higher density of entanglement of the molecular chain. When the elastic shear modulus G' of the copolymer 1 is within the above range, processability and mechanical properties (such as tensile strength) will be more excellent.

(Copolymer 2)

The fluorinated copolymer of the present invention according to a second embodiment (hereinafter sometimes referred to as "copolymer 2") has units based on vinylidene fluoride (hereinafter sometimes referred to as "VdF") (hereinafter sometimes referred to as "VdF units") and the compound 1 units, and has either one or both of iodine atoms and bromine atoms. Compound 1 is $CF_2=CFOCF_2CF_2OCF_2OCF_2OCF_3$ and/or $CF_2=CFOCF_2CF_2OCF_2CF_2OCF_2CF_3$.

By having the compound 1 units, the copolymer 2 will be excellent in low temperature properties.

As the compound 1, the same compound as the compound 1 for the copolymer 1 is used.

The copolymer 2 may have units based on a monomer other than VdF and the compound 1 (hereinafter sometimes referred to as "other monomer").

As other monomer, for example, hexafluoropropylene (hereinafter sometimes referred to as "HFP"), DV, chlorotrifluoroethylene, TFE, vinyl fluoride, ethylene, ethylidene norbornene, vinyl crotonate, the compound 2, the compound 3 and a monomer having a nitrile group may be mentioned. Other monomer may be used alone or in combination of two or more.

As other monomer, HFP or DV is preferred.

When the copolymer 2 has the HFP units, the polymer 2 will be more excellent in heat resistance and chemical resistance.

When the copolymer 2 has the DV units, the copolymer 2 will be more excellent in crosslinking property, and the crosslinked product of the copolymer 2 will be more excellent in mechanical properties (such as tensile strength and compression set at high temperature).

As DV, the same compound as DV for the copolymer 1 may be mentioned, and preferred embodiments are also the same.

The proportion of the VdF unit, to the total number of moles of the VdF units and the compound 1 units, is preferably from 86 to 96 mol%, more preferably from 87 to 95 mol%, further preferably from 88 to 94 mol%.

In a case where the copolymer 2 has other monomer units, the proportion of the VdF units, to the total number of moles of the VdF units, the compound 1 units and other monomer units, is preferably from 52 to 93 mol%, more preferably from 55 to 87 mol%, further preferably from 58 to 80 mol%.

When the proportion of the VdF units is within the above range, the copolymer 2 will be more excellent in mechanical properties, heat resistance, chemical resistance (alkali resistance or the like), oil resistance and weather resistance.

The proportion of the compound 1 units, to the total number of moles of the VdF units and the compound 1 units, is preferably from 4 to 14 mol%, more preferably from 5 to 13 mol%, further preferably from 6 to 12 mol%.

The proportion of the compound 1 units, to the total mass of the VdF units and the compound 1 units, is preferably from 10 to 50 mass%, more preferably from 8 to 45 mass%, further preferably from 5 to 40 mass%.

In a case where the copolymer 2 has other monomer units, the proportion of the compound 1 units, to the total number of moles of the VdF units, the compound 1 units and other monomer units, is preferably from 2 to 15 mol%, more preferably from 3 to 13 mol%, further preferably from 5 to 12 mol%.

In a case where the copolymer 2 has other monomer units, the proportion of the compound 1 units, to the total mass of the VdF units, the compound 1 units and other monomer units, is preferably from 5 to 50 mass%, more preferably from 8 to 45 mass%, further preferably from 10 to 40 mass%.

When the proportions of the compound 1 units in terms of mole and mass are at least the lower limit values of the above ranges, the copolymer 2 will be more excellent in low temperature properties. When the proportions of the compound 1 units in terms of mole and mass are at most the upper limit values of the above ranges, mechanical properties and productivity will be excellent.

In a case where the copolymer 2 has other monomer units, the proportion of other monomer units, to the total number of moles of the VdF units, the compound 1 units and other monomer units, is preferably from 0.10 to 40 mol%, more preferably from 0.15 to 36 mol%, further preferably from 0.20 to 32 mol%.

In a case where the HFP units are the above other monomer units, the proportion of the HFP units, to the total number of moles of the VdF units, the compound 1 units and the HFP units, is preferably from 5 to 40 mol%, more preferably from 10 to 36 mol%, further preferably from 15 to 32 mol%.

When the proportion of the HFP units is within the above range, the copolymer 2 will be more excellent in mechanical properties, heat resistance, chemical resistance (alkali resistance or the like), oil resistance and weather resistance.

In a case where the DV units are the above other monomer units, the proportion of the DV units, to the total number of moles of the VdF units, the compound 1 units and the DV units, is preferably from 0.10 to 1.0 mol%, more preferably from 0.15 to 0.8 mol%, further preferably from 0.20 to 0.6 mol%.

When the proportion of the DV units is at least the lower limit value of the above range, the copolymer 2 will be excellent in crosslinking property, and the crosslinked product of the copolymer 2 will be more excellent in mechanical properties (such as tensile strength and compression set at high temperature). When the proportion of the DV units is at most the upper limit value of the above range, while maintaining excellent physical properties of the crosslinked product of the copolymer 2, breakage in a case where a stress such as bending is applied at high temperature is suppressed.

The total number of moles of the VdF units and the compound 1 units, to all the units constituting the copolymer 2, is preferably from 50 to 100 mol%, more preferably from 60 to 100 mol%, further preferably from 70 to 100 mol%.

In a case where the copolymer 2 has the HFP units or the DV units, the total number of moles of the HFP units of the DV units, the VdF units and the compound 1 units, to all the units constituting the copolymer 2 is preferably from 50 to 100 mol%, more preferably from 60 to 100 mol%, further preferably from 70 to 100 mol%.

By having either one or both of iodine atoms and bromine atoms, the copolymer 2 will be excellent in crosslinking property. The iodine atoms or the bromine atoms are preferably bonded to the terminal of the molecular chain of the copolymer 2.

The total proportion of the iodine atoms and the bromine atoms to the mass of the copolymer 2 is preferably from 0.01 to 5.00 mass%, more preferably from 0.03 to 2.00 mass%, further preferably from 0.05 to 1.00 mass%. When the total proportion of the iodine atoms and the bromine atoms is within the above range, the copolymer 2 will be more excellent in crosslinking property and mechanical properties.

The glass transition temperature (hereinafter sometimes referred to as "Tg") of the copolymer 2 is a measure of the low temperature properties of the copolymer 2. Tg of the copolymer 2 is preferably at most -11°C, more preferably at most -13°C, further preferably at most -18°C. When Tg of the copolymer 2 is at most the upper limit value of the above range, the copolymer 2 will be more excellent in low temperature properties. Tg of the copolymer 2 is preferably as low as possible, and the lower limit value is not particularly limited, and in view of processability and mechanical properties, Tg of the copolymer 2 is preferably at least -58°C.

In a case where the VdF units, the compound 1 units and other monomer units are contained, the proportion (X2 mol%) of the compound 1 units to the total number of moles of other monomer units, Tg (Y2 °C) of the copolymer 2, and the glass transition temperature Y3 of a fluorinated copolymer having units constituting the copolymer 2 except for the units based on the compound 1 (hereinafter sometimes referred to as "copolymer 3"), preferably satisfy (Y2-Y3)/X2≦-0.8, more preferably (Y2-Y3)/X2≦-1.0, further preferably (Y2-Y3)/X2≦-1.5.

$$(Y2-Y3)/X2 \leq -0.8$$

being satisfied means that by introducing 1 mol% of the compound 1 units to the copolymer 3, Tg of the obtainable copolymer 2 is decreased by at least 0.8°C than the conventional FKM, that is, the compound 1 is a compound effective to decrease Tg of the copolymer 2 by at least 0.8°C when 1 mol% thereof is introduced. As such a compound 1, C7-PEVE and/or EEAVE is used.

The elastic shear modulus G' of the copolymer 2 is preferably from 10 to 800 kPa, more preferably from 25 to 550 kPa, further preferably from 30 to 450 kPa. A higher elastic shear modulus G' means a higher molecular weight of the polymer and a higher density of entanglement of the molecular chain. When the elastic shear modulus G' of the copolymer 2 is within the above range, processability and mechanical properties will be more excellent.

(Method for producing fluorinated copolymer)

The fluorinated copolymer of the present invention may be produced, for example, by a method of making at least one member selected from the group consisting of a monomer containing either one or both of an iodine atom and a bromine atom, and a chain transfer agent containing either one or both of an iodine atom and a bromine atom, present in the polymerization system, when polymerizing a monomer component.

The monomer component contains, in a case where the copolymer 1 is to be produced, TFE, propylene and the compound 1, and in a case where the copolymer 2 is to be produced, VdF and the compound 1.

It is possible to introduce either one or both of iodine atoms and bromine atoms to the fluorinated copolymer, according to the method of making at least one member selected from the group consisting of a monomer containing either one or both of an iodine atom and a bromine atom, and a chain transfer agent containing either one or both of an iodine atom and a bromine atom, present in the polymerization system, when polymerizing the monomer component.

As the monomer containing either one or both of an iodine atom and a bromine atom, the same monomer as mentioned in explanation of the copolymer 1 may be mentioned.

As the chain transfer agent containing either one or both of an iodine atom and a bromine atom, for example, compound represented by the formula 8 (hereinafter sometimes referred to as "compound 8"), compound represented by the formula 9 (hereinafter sometimes referred to as "compound 9"), and compound represented by the formula 10 (hereinafter sometimes referred to as "compound 10") may be mentioned.

$$R^{f\,4} I_2 \qquad \text{formula 8}$$

$$R^{f\,5} IBr \qquad \text{formula 9}$$

$$R^{f\,6} Br_2 \qquad \text{formula 10}$$

wherein $R^{f\,4}$, $R^{f\,5}$ and $R^{f\,6}$ are a $C_{1-16}$ fluoroalkylene group or a skeleton having an aromatic ring.

The fluoroalkylene group as $R^{f\,4}$, $R^{f\,5}$ and $R^{f\,6}$ may be linear or branched. $R^{f\,4}$, $R^{f\,5}$ and $R^{f\,6}$ are preferably a perfluoroalkylene group.

As the compound 8, for example, 1,2-diiodoperfluoroethane, 1,3-diiodoperfluoropropane, 1,4-diiodoperfluorobutane (hereinafter sometimes referred to as "C4DI"), 1,5-diiodoperfluoropentane, 1,6-diiodoperfluorohexane, 1,8-diiodoperfluorooctane, 1,3-diiodo-2-chloroperfluoropropane, 1,5-diiodo-2,4-dichloroperfluoropentane, 1,12-diiodoperfluorododecane, 1,16-diiodoperfluorohexadecane, diiodomethane, 1,2-diiodoethane, 1,3-diiodo-n-propane, and (2-iodoethyl) substituted benzene may be mentioned, and C4DI is preferred.

As the compound 9, for example, 1-iodo-4-bromoperfluorobutane, 1-iodo-6-bromoperfuorohexane, 1-iodo-8-bromoperfluorooctane, 1-bromo-2-iodoperfluoroethane, 1-bromo-3-iodoperfluoropropane, 2-bromo-3-iodoperflurobutane, 3-bromo-4-iodoperfluorobutene-1, 2-bromo-4-iodoperfluorobutene-1, monoiodo-monobromo-substituted benzene, and diiodo-monobromo-substituted benzene may be mentioned.

As the compound 10, for example, $CF_2Br_2$, $BrCF_2CF_2Br$, $CF_3CFBrCF_2Br$, $CFClBr_2$, $BrCF_2CFClBr$, $CFBrClCF-ClBr$, $BrCF_2CF_2CF_2Br$, $BrCF_2CFBrOCF_3$, and (2-bromoethyl) substituted benzene may be mentioned.

As the chain transfer agent containing either one or both of an iodine atom and a bromine atom other than the compounds 8, 9 and 10, a compound having only either one of an iodine atom and a bromine atom, may be mentioned, such as 2-iodoperfluropropane.

The total amount of the monomer containing either one or both of an iodine atom and a bromine atom, and the chain transfer agent containing either one or both of an iodine atom and a bromine atom, is properly adjusted so that the total proportion of iodine atoms and bromine atoms to the mass of the copolymer 1 and the copolymer 2 is within the above range.

In the method for producing the fluorinated copolymer, it is preferred to start the polymerization in the presence of a radical polymerization initiator. As the radical polymerization initiator, a water soluble initiator or a redox initiator is preferred.

As the water-soluble initiator, for example, a persulfate (such as ammonium persulfate, sodium persulfate or potassium persulfate), and an organic initiator (such as disuccinic peroxide or azobisisobutylamidine dihydrochloride) may be mentioned.

As the redox initiator, for example, a combination of a reducing agent and the above persulfate may be mentioned.

The reducing agent may, for example, be a thiosulfate, a sulfite, a bisulfite, a pyrosulfite or a hydroxymethanesulfinate.

The redox initiator preferably contains, in addition to the reducing agent and the persulfate, as a third component, a small amount of iron, an iron salt such as ferrous salt, or a silver salt such as silver sulfate. Among the iron salts, a water-soluble iron salt (such as ferrous sulfate) is preferred.

It is preferred to use, in addition to the redox initiator, a chelating agent. The chelating agent may, for example, be disodium ethylenediaminetetraacetate dihydrate.

The amount of the radical polymerization initiator is preferably from 0.0001 to 3 parts by mass, more preferably from 0.001 to 1 part by mass, per 100 parts by mass of the monomer component.

As the polymerization method, for example, emulsion polymerization method, solution polymerization method, suspension polymerization method or bulk polymerization method may be mentioned, and in that the molecular weight and the copolymer composition are easily adjusted and in view of excellent productivity, preferred is emulsion polymerization method in which the monomer component is polymerized in an aqueous medium in the presence of an emulsifier.

As the aqueous medium, water or water containing a water-soluble organic solvent is preferred, and water containing a water-soluble organic solvent is more preferred.

The water-soluble organic solvent may, for example, be tert-butyl alcohol, propylene glycol, dipropylene glycol, dipropylene glycol monomethyl ether or tripropylene glycol.

The pH of the aqueous medium is preferably from 7 to 14, more preferably from 7 to 11, further preferably from 7.5 to 11, particularly preferably from 8 to 10.5.

To adjust pH, it is preferred to use a pH buffer. The pH buffer may, for example, be a phosphate (such as disodium hydrogenphosphate or sodium dihydrogen phosphate) or a carbonate (sodium bicarbonate or sodium carbonate).

The emulsifier may, for example, be an anionic emulsifier, a nonionic emulsifier or a cationic emulsifier, and in view of excellent mechanical and chemical stability of the latex, more preferably an anionic emulsifier or a cationic emulsifier, more preferably an anionic emulsifier.

The anionic emulsifier may, for example, be a hydrocarbon emulsifier (such as sodium lauryl sulfate or sodium dodecylbenzene sulfonate), a fluorinated alkanoate (such as ammonium perfluorooctanoate or ammonium perfluorohexanoate), or a fluorinated ether carboxylic acid compound.

The emulsifier is preferably an emulsifier having a fluorine atom, more preferably a fluorinated alkanoate or a fluorinate ether carboxylic acid compound, further preferably a fluorinated ether carboxylic acid compound.

The fluorinated ether carboxylic acid compound may, for example, be a compound represented by the formula 11 (hereinafter sometimes referred to as "compound 11").

$$R^{f6}OR^{f7}COOA \qquad \text{formula 11}$$

wherein $R^{f6}$ is a $C_{1-8}$ perfluoroalkyl group, $R^{f7}$ is a fluoroalkylene group or a fluoroalkylene group having one or more etheric oxygen atom, A is a hydrogen atom, an atom classified among alkali metals, or $NH_4$. $R^{f7}$ may have a branch of a $C_{1-3}$ perfluoroalkyl group. The number of carbon atoms in $R^{f7}$ is preferably from 1 to 12, more preferably from 1 to 8.

The fluorinated ether carboxylic acid compound is preferably compound represented by the formula 12 (hereinafter sometimes referred to as "compound 12").

$$F(CF_2)_p O(CF(X^1)CF_2 O)_q CF(X^1)COOA \qquad \text{formula 12}$$

wherein $X^1$ is a fluorine atom or a $C_{1-3}$ perfluoroalkyl group, A is a hydrogen atom, an atom classified among alkali metals, or $NH_4$, p is an integer of from 1 to 10, and q is an integer of from 0 to 3.

As the compound 11 or the compound 12, for example, the following compounds may be mentioned.

$$C_3 F_7 OCF_2 C(O)ONH_4,$$

$$C_4 F_9 OCF_2 C(O)ONH_4,$$

$$C_5 F_{11} OCF_2 C(O)ONH_4,$$

$$CF_3 OCF_2 CF_2 OCF_2 C(O)ONH_4,$$

$$C_2 F_5 OCF_2 CF_2 OCF_2 C(O)ONH_4,$$

$$C_2 F_5 OCF(CF_3)C(O)ONH_4,$$

$$C_3 F_7 OCF(CF_3)C(O)ONH_4,$$

$$C_4 F_9 OCF(CF_3)C(O)ONH_4,$$

$$CF_3 OCF(CF_3)CF_2 OCF(CF_3)C(O)ONH_4,$$

$$C_3 F_7 OCF(CF_3)CF_2 OCF(CF_3)C(O)ONH_4,$$

$$CF_3 O(CF_2)_3 OCFHCF_2 C(O)ONH_4,$$

$$CF_3 O(CF_2)_3 OCF_2 C(O)ONH_4,$$

$$CF_3 O(CF_2)_3 O(CF_2)_2 C(O)ONH_4,$$

$$C_2 F_5 O(CF_2)_2 O(CF_2)_2 C(O)ONH_4,$$

$$CF_3 O(CF_2)_3 OCF(CF_3)C(O)ONH_4,$$

$$C_2 F_5 O(CF_2)_2 OCF(CF_3)C(O)ONH_4,$$

and

$$CF_3 \, OCF_2 \, OCF_2 \, OCF_2 \, C(O)ONH_4 \, .$$

The amount of the emulsifier to 100 parts by mass of the aqueous medium is preferably from 0.01 to 15 parts by mass, more preferably from 0.1 to 10 parts by mass, further preferably from 0.1 to 3 parts by mass.

By the emulsion polymerization method, a latex containing the fluorinated copolymer is obtained. The fluorinated copolymer is aggregated and then separated from the latex.

The aggregation method may, for example, be a salting out method by addition of a metal salt, a method of adding an inorganic acid such as hydrochloric acid, a method by mechanical shearing, or a method by freezing or defrosting.

The polymerization temperature is preferably from 10 to 70°C, more preferably from 12 to 60°C, further preferably from 15 to 50°C. When the polymerization temperature is at least the lower limit value of the above range, polymerizability will be high, and productivity will be excellent in view of polymerization rate. When the polymerization temperature is at most the upper limit value of the above range, iodine atoms or bromine atoms will be sufficiently introduced to the fluorinated copolymer, and the fluorinated copolymer will be more excellent in crosslinking property. Further, the molecular weight of the fluorinated copolymer will be sufficiently high, the elastic shear modulus G' will be sufficiently high, and the fluorinated copolymer will be more excellent in processability.

The polymerization pressure is preferably at most 3.0 MPaG, more preferably from 0.3 to 2.8 MPaG, further preferably from 0.5 to 2.5 MPaG. When the polymerization pressure is at least the lower limit value of the above range, the molecular weight of the fluorinated copolymer will be sufficiently high, the elastic storage modulus G' will be sufficiently high, and the fluorinated copolymer will be more excellent in processability. When the polymerization pressure is at most the upper limit value of the above range, the compound 1 will be sufficiently introduced to the fluorinated copolymer, and the fluorinated copolymer will be more excellent in low temperature properties.

The polymerization rate is preferably from 1 to 500 g/L·hr, more preferably from 2 to 300 g/L·hr, further preferably from 3 to 200 g/L·hr. When the polymerization rate is at least the lower limit value of the above range, productivity is practically excellent. When the polymerization rate is at most the upper limit value of the above range, the fluorinated copolymer tends to hardly have low molecular weight and will be more excellent in crosslinking property.

The polymerization time is preferably from 0.5 to 50 hours, more preferably from 1 to 30 hours, further preferably from 2 to 20 hours.

(Mechanism of action)

The above-described fluorinated copolymer of the present invention is excellent in low temperature properties since it has the compound 1 units, and is excellent in crosslinking property since it has either one or both of iodine atoms and bromine atoms.

By using a chain transfer agent having an iodine atom at the time of polymerization of monomers constituting the fluorinated copolymer disclosed in Patent Document 1, $CH_2 =CHO(CH_2)_m (CF_2)_n F$ is hardly copolymerized, whereby the obtainable fluorinated copolymer tends to be insufficient in low temperature properties. On the other hand, in the method for producing a fluorinated copolymer of the present invention, the compound 1 is used instead of $CH_2 =CHO(CH_2)_m (CF_2)_n F$. Accordingly, even by using e.g. a chain transfer agent having an iodine atom at the time of polymerization of a monomer component, the compound 1 is easily copolymerized, and the obtainable fluorinated copolymer will be excellent in low temperature properties.

(Application)

The fluorinated copolymer of the present invention is used, for the purpose of improving mechanical properties, etc., usually as a crosslinked product obtained by blending a crosslinking agent, a crosslinking aid, etc. with the fluorinated copolymer and crosslinking the resulting composition.

The composition is prepared by mixing a crosslinking agent, a crosslinking aid, other additives, etc., followed by kneading. For kneading, a kneading apparatus such as a roller, a kneader, a Banbury mixer or an extruder may be used.

As the crosslinking agent, for example, an organic peroxide may be mentioned.

The organic peroxide may, for example, be a dialkyl peroxide (such as di-tert-butyl peroxide, tert-butyl cumyl peroxide, dicumyl peroxide,

$\alpha,\alpha$-bis(tert-butylperoxy)-p-diisopropylbenzene,
2,5-dimethyl-2,5-di(tert-butylperoxy)hexane or
2,5-dimethyl-2,5-di(tert-butylperoxy)hexane-3),
1,1-di(tert-butylperoxy)-3,3,5-trimethylcyclohexane, 2,5-dimethylhexane-2,5-dihydroxy peroxide, benzoyl peroxide, tert-butylperoxybenzene,
2,5-dimethyl-2,5-di(benzoylperoxy)hexane, tert-butylperoxymaleic acid, or
tert-butylperoxyisopropyl carbonate. The organic peroxide is preferably dialkyl peroxide.

The content of the organic peroxide to 100 parts by mass of the fluorinated copolymer is preferably from 0.3 to 10 parts by mass, more preferably from 0.3 to 5 parts by mass, further preferably from 0.5 to 3 parts by mass. When the content of the organic peroxide is within the above range, the crosslinking rate will be appropriate, and the obtainable crosslinked product will be excellent in balance between the tensile strength and elongation.

The crosslinking aid may, for example, be triallyl cyanurate, triallyl isocyanurate, trimethacryl isocyanurate, 1,3,5-triacryloylhexahydro-1,3,5-triazine, triallyl trimellitate, m-phenylenediamine bismaleimide, p-quinone dioxime, p,p'-dibenzoylquinone dioxime, dipropargyl terephthalate, diallyl phthalate, N,N',N'',N'''-tetraallyl terephthalamide, a vinyl group-containing siloxane oligomer (polymethylvinyl siloxane or polymethylphenylvinyl siloxane). The crosslinking aid is preferably triallyl cyanurate, triallyl isocyanurate or trimethacryl isocyanurate, more preferably triallyl isocyanurate.

The content of the crosslinking aid to 100 parts by mass of the fluorinated copolymer is preferably from 0.1 to 20 parts by mass, more preferably from 1 to 10 parts by mass. When the amount of the crosslinking aid is within the above range, the crosslinking rate will be appropriate, and the obtainable crosslinked product will be excellent in the balance between tensile strength and elongation.

A metal oxide may be blended with the composition. The metal oxide is preferably a bivalent metal oxide. The bivalent metal oxide is preferably magnesium oxide, calcium oxide, zinc oxide or lead oxide.

The content of the metal oxide to 100 parts by mass of the fluorinated copolymer is preferably from 0.1 to 10 parts by mass, more preferably from 0.5 to 5 parts by mass. By blending the metal oxide with the composition, the fluorinated copolymer will have further improved crosslinking property.

As other additives, for example, a filler, an acid acceptor, a stabilizer, a coloring agent, an antioxidant, a processing aid, a glidant, a lubricant, a flame retardant, an antistatic agent, a pigment, a reinforcing agent, or a vulcanizing accelerator may be mentioned.

Such other additives may be used alone or in combination of two or more.

With the composition, depending upon the application, a polymer material other than the fluorinated copolymer may be blended. Other polymer material may, for example, be a fluororesin (such as polytetrafluoroethylene, polyvinylidene fluoride, polyvinyl fluoride, polychlorotrifluoroethylene, a bipolymer consisting of TFE units and ethylene units (hereinafter sometimes referred to as "E units"), a tetrafluoroethylene/perfluoroalkyl vinyl ether copolymer, or a tetrafluoroethylene/hexafluoropropylene copolymer), a fluorinated elastomer (such as a copolymer having VdF units and having no compound 1 units, a copolymer having TFE units and P units and having no compound 1 units, a copolymer having TFE units and VdF units and having no compound 1 units, or a copolymer having TFE units and PAVE units and having no compound 1 units), or a hydrocarbon elastomer (such as a copolymer having E units, P units and non-conjugated diene units). By blending the fluororesin with the composition, forming property and mechanical properties will further improve. By blending the hydrocarbon elastomer with the composition, the crosslinking property will further improve.

The composition may be crosslinked simultaneously with forming by e.g. hot pressing, or may preliminarily be formed and then crosslinked.

The forming method may, for example, be compression molding, injection molding, extrusion, calendaring, dipping or coating.

As the crosslinking conditions, considering the forming method and the shape of the crosslinked product, various conditions such as heat press crosslinking, steam crosslinking, hot air crosslinking and lead encasing crosslinking may be employed. The crosslinking temperature may, for example, be from 100 to 400°C. The crosslinking time may, for example, be from several seconds to 24 hours.

For the purpose of improving mechanical properties and compression set of the crosslinked product and stabilizing other properties, secondary crosslinking may be conducted. The second crosslinking temperature may, for example, be from 100 to 300°C. The secondary crosslinking time may, for example, be from 30 minutes to 48 hours.

The formed composition may be crosslinked by irradiation with radioactive rays. The radioactive rays may, for example, be electron beams or ultraviolet rays. The amount of irradiation in electron beam irradiation is preferably from 0.1 to 30 Mrad, more preferably from 1 to 20 Mrad.

EXAMPLES

Now, the present invention will be described in further detail with reference to Examples. However, it should be understood that the present invention is not restricted by such specific Examples.

Ex. 1 to 5 are Examples of the present invention, Ex. 6 to 8 are Reference Examples, and Ex. 9 to 12 are Comparative Examples.

(Copolymer composition)

The proportions of units constituting the fluorinated copolymer were obtained by $^{19}$ F-NMR analysis and $^{13}$ C-NMR analysis.

(Proportion of iodine atoms)

From the fluorinated copolymer, a 5 cm square sheet having a thickness of 0.45 mm was prepared by press molding at 100°C. With respect to the obtained sheet, measurement was conducted by fluorescent x-ray analysis (XRF) at a measurement surface diameter of 30 mm. Further, a KI reference solution was subjected to quantitative analysis by thin film FP method, and from the obtained analytical curve, the iodine concentration was calibrated and the proportion (mass%) of iodine atoms in the fluorinated polymer was determined. The detection limit is 0.1.

(Tg)

Tg of the fluorinated copolymer was obtained by raising the temperature at a temperature-raising rate of 10°C/min using a thermal analyzer (manufactured by Seiko Instruments Inc., DSC).

(Elastic shear modulus G')

In accordance with ASTM D 6204, using Rubber Process Analyzer (manufactured by ALPHA TECHNOLOGIES, RPA2000), the torque was measured by changing the frequency from 1 per minute to 2000 per minutes under conditions of sample amount: 8g, temperature: 100°C amplitude: 0.5°, and the torque at 50 per minute was taken as the elastic shear modulus G' of the fluorinated copolymer.

(Abbreviations)

C4DI: 1,4-diiodoperfluorobutane
DVE-3: $CF_2 = CFO(CF_2)_3 OCF=CF_2$
EEA: $CF_3 CF_2 OCF_2 CF_2 OCF_2 COONH_4$
Rongalite: 2.5 mass% aqueous solution of sodium hydroxymethanesulfinate dihydrate adjusted to pH 10.0 with sodium hydroxide.

As monomers to improve low temperature properties of the fluorinated copolymer (hereinafter sometimes referred to as "LT-monomer"), the following compounds were used.

C7-PEVE: $CF_2 = CFOCF_2 CF_2 OCF_2 OCF_2 OCF_3$

EEAVE: $CF_2 = CFOCF_2 CF_2 OCF_2 CF_2 OCF_2 CF_3$

PHVE: $CF_2 = CFOCF_2 CF(CF_3)OCF_2 CF_2 CF_3$

FAVE-6: $CH_2 = CHOCH_2 CH_2 (CF_2)_6 F$

(Ex. 1)

A stainless steel pressure resistant reactor having an internal capacity of 3200 mL equipped with an agitating anchor blade was evacuated of air, and to the reactor, 1450 g of deionized water, 60 g of disodium hydrogenphosphate dodecahydrate, 0.9 g of sodium hydroxide, 198 g of tert-butyl alcohol, 81 g of a 30 mass% aqueous solution of EEA, and 7.5 g of ammonium persulfate were added. Further, an aqueous solution having 0.4 g of disodium ethylenediaminetetraacetate dihydrate and 0.3 g of ferrous sulfate heptahydrate dissolved in 200 g of deionized water, and 387 g of C7-PEVE, were added to the reactor. At that point, the pH of the aqueous medium in the reactor was 9.0.

Then, at 25°C, a monomer mixture gas with a molar ratio of TFE/P=88/12 was injected so that the pressure in the reactor would be 2.17 MPaG. The anchor blade was rotated at 300 rpm, and 4.0 g of C4DI was added. Then Rongalite was added to the reactor to initiate the polymerization reaction. After the initiation of the polymerization reaction also, Rongalite was continuously added to the reactor using a high pressure pump.

After the initiation of the polymerization reaction, a monomer mixture gas with a molar ratio of TFE/P=56/44 was injected, and at a point when the amount injected reached 420 g, addition of Rongalite was terminated. When the total amount of the amount of the TFE/P monomer mixture gas injected reached 450 g, the internal temperature of the reactor was decreased to 10°C to terminate the polymerization reaction thereby to obtain a latex. From the initiation of the polymerization to the termination of the polymerization, the amount of Rongalite added was 133 g. The polymerization time was 4.5 hours.

To the obtained latex, a 5 mass% aqueous solution of calcium chloride was added to aggregate the latex, to precipitate fluorinated copolymer in Ex. 1. The fluorinated copolymer in Ex. 1 was collected by filtration, washed with deionized water and dried in an oven at 100°C for 15 hours to obtain 702 g of white fluorinated copolymer in Ex. 1. The results are shown in Table 1.

(Ex. 2)

A stainless steel pressure resistant reactor having an internal capacity of 3200 mL equipped with an agitating anchor blade was evacuated of air, and to the reactor, 1330 g of deionized water, 60 g of disodium hydrogenphosphate dodecahydrate, 0.9 g of sodium hydroxide, 198 g of tert-butyl alcohol, 242 g of a 30 mass% aqueous solution of EEA, and 7.5 g of ammonium persulfate were added. Further, an aqueous solution having 0.4 g of disodium ethylenediaminetetraacetate dihydrate and 0.3 g of ferrous sulfate heptahydrate dissolved in 200 g of deionized water, and 152 g of C7-PEVE, were added to the reactor.

Then, at 25°C, a monomer mixture gas with a molar ratio of TFE/P=88/12 was injected so that the pressure in the reactor would be 1.00 MPaG. The anchor blade was rotated at 300 rpm, and 2.6 g of C4DI and 6.75 g of DVE-3 were added. Then, Rongalite was added to the reactor to initiate the polymerization reaction. After the initiation of the polymerization reaction also, Rongalite was continuously added to the reactor using a high pressure pump.

After the initiation of the polymerization reaction, a monomer mixture gas with a molar ratio of TFE/P=56/44 was injected, and at a point when the amount injected reached 200 g, addition of Rongalite was terminated. When the total amount of the TFE/P monomer mixture gas injected reached 230 g, the internal temperature of the reactor was decreased to 10°C to terminate the polymerization reaction thereby to obtain a latex. From the initiation of the polymerization to the termination of the polymerization, the amount of Rongalite added was 151 g. The polymerization time was 4 hours.

To the obtained latex, a 5 mass% aqueous solution of calcium chloride was added to aggregate the latex, to precipitate fluorinated copolymer in Ex. 2. The fluorinated copolymer in Ex. 2 was collected by filtration, washed with deionized water and dried in an oven at 100°C for 15 hours to obtain 339 g of white fluorinated copolymer in Ex. 2. The results are shown in Table 1.

(Ex. 3, 4, 6, 7)

Fluorinated copolymer was obtained in the same manner as in Ex. 1 except that the type of the LT-monomer, the amount of materials charged and the polymerization conditions were changed as identified in Table 1 or 2. The results are shown in Table 1 or 2.

(Ex. 5, 8)

Fluorinated copolymer was obtained in the same manner as in Ex. 2 except that the type of the LT-monomer, the amount of materials charged and the polymerization conditions were changed as identified in Table 2. The results are shown in Table 2.

(Ex. 9)

Fluorinated copolymer was obtained in the same manner as in Ex. 1 except that no LT-monomer was added and that the amount of materials charged and the polymerization conditions were changed as identified in Table 3. The results are shown in Table 3.

(Ex. 10)

Fluorinated copolymer was obtained in accordance with the method disclosed in Example 1 of Patent Document 1. The results are shown in Table 3.

(Ex. 11)

Fluorinated copolymer was obtained in the same manner as in Ex. 1 except that no C4DI was added and that the type of the LT-monomer, the amount of materials charged and the polymerization conditions were changed as identified in Table 3. The results are shown in Table 3.

(Ex. 12)

Fluorinated copolymer was obtained in the same manner as in Ex. 1 except that the type of the LT-monomer, the amount of materials charged and the polymerization conditions were changed as identified in Table 3. The results are shown in Table 3.

[Table 1]

| | | Ex. 1 | Ex. 2 | Ex. 3 | Ex. 4 |
|---|---|---|---|---|---|
| Type of LT-monomer | | C7-PEVE | C7-PEVE | EEAVE | EEAVE |
| Amount of monomer mixture gas supplied (g) | | 450 | 230 | 450 | 230 |
| Amount of LT-monomer added (g) | | 387 | 152 | 258 | 132 |
| Amount of C4DI added (g) | | 4.0 | 2.6 | 3.2 | 2.1 |
| Amount of DVE-3 added (g) | | 0 | 6.75 | 0 | 0 |
| Amount of 30 mass% aqueous solution of EEA added (g) | | 81 | 242 | 81 | 81 |
| Polymerization pressure (MPa [gauge]) | | 2.17 | 1.00 | 2.17 | 2.17 |
| Polymerization temperature (°C) | | 25 | 25 | 25 | 40 |
| Yield (g) | | 702 | 339 | 588 | 317 |
| Addition of chain transfer agent having iodine atoms | | Added | Added | Added | Added |
| Copolymer | TFE units | 54 | 51 | 54 | 53 |
| composition (mol%) *1 | P units | 43 | 41 | 44 | 43 |
| | LT-monomer units | 2 | 8 | 2 | 4 |
| LT-monomer units (mass%) *2 | | 15 | 33 | 11 | 20 |
| DVE-3 units (mol%) *1 | | 0 | 0.6 | 0 | 0 |
| Iodine atoms (mass%) *3 | | 0.3 | 0.4 | 0.3 | 0.4 |
| Tg (°C) | | -10 | -20 | -5 | -11 |
| Y1/X1 | | -5 | -2.5 | -2.5 | -2.8 |
| Elastic shear modulus G' (kPa) | | 420 | 136 | 288 | 32 |

*1: Proportion to the total number of moles of TFE units, P units and LT-monomer units.
*2: Proportion to the total mass of TFE units, P units and LT-monomer units.
*3: Proportion to the mass of fluorinated copolymer.

[Table 2]

| | Ex. 5 | Ex. 6 *4 | Ex. 7 *4 | Ex. 8 *4 |
|---|---|---|---|---|
| Type of LT-monomer | EEAVE | PHVE | PHVE | PHVE |
| Amount of monomer mixture gas supplied (g) | 230 | 360 | 230 | 230 |
| Amount of LT-monomer added (g) | 164 | 249 | 159 | 159 |
| Amount of C4DI added (g) | 2.6 | 1.6 | 1.0 | 2.6 |
| Amount of DVE-3 added (g) | 6.75 | 0 | 0 | 6.75 |
| Amount of 30 mass% aqueous solution of EEA added (g) | 242 | 81 | 161 | 242 |

(continued)

| | | Ex. 5 | Ex. 6 *4 | Ex. 7 *4 | Ex. 8 *4 |
|---|---|---|---|---|---|
| Polymerization pressure (MPa [gauge]) | | 1.00 | 1.5 | 1.00 | 1.00 |
| Polymerization temperature (°C) | | 25 | 25 | 25 | 25 |
| Yield (g) | | 342 | 519 | 361 | 325 |
| Addition of chain transfer agent having iodine atoms | | Added | Added | Added | Added |
| Copolymer composition (mol%) *1 | TFE units | 56 | 50 | 51 | 50 |
| | P units | 37 | 44 | 41 | 42 |
| | LT-monomer units | 7 | 6 | 8 | 8 |
| LT-monomer units (mass%) *2 | | 31 | 28 | 34 | 34 |
| DVE-3 units (mol%) *1 | | 0.6 | 0 | 0 | 0.6 |
| Iodine atoms (mass%) *3 | | 0.4 | 0.2 | 0.1 | 0.3 |
| Tg (°C) | | -14 | -6 | -8 | -7 |
| Y1/X1 | | -2 | -1 | -1 | -0.9 |
| Elastic shear modulus G' (kPa) | | 147 | 108 | 45 | 129 |

*1: Proportion to the total number of moles of TFE units, P units and LT-monomer units.
*2: Proportion to the total mass of TFE units, P units and LT-monomer units.
*3: Proportion to the mass of fluorinated copolymer.
*4: Reference Example

[Table 3]

| | | Ex. 9 | Ex. 10 | Ex. 11 | Ex. 12 |
|---|---|---|---|---|---|
| Type of LT-monomer | | Nil | FAVE-6 | FAVE-6 | FAVE-6 |
| Amount of monomer mixture gas supplied (g) | | 450 | 0 | 360 | 230 |
| Amount of LT-monomer added (g) | | 0 | The same as in Example 1 of Patent Document 1 | 72 | 225 |
| Amount of C4DI added (g) | | 4.0 | | 0 | 3.2 |
| Amount of DVE-3 added (g) | | 0 | | 0 | 0 |
| Amount of 30 mass% aqueous solution of EEA added (g) | | 40 | | 81 | 81 |
| Polymerization pressure (MPa [gauge]) | | 2.47 | | 2.17 | 2.17 |
| Polymerization temperature (°C) | | 25 | 25 | 25 | 25 |
| Yield (g) | | 412 | 20.6 | 211 | 442 |
| Addition of chain transfer agent having iodine atoms | | Added | Nil | Nil | Added |
| Copolymer composition (mol%) *1 | TFE units | 56 | 53 | 54 | 52 |
| | P units | 44 | 30 | 38 | 43 |
| | LT-monomer units | 0 | 17 | 8 | 5 |
| LT-monomer units (mass%) *2 | | 0 | 50 | 31 | 22 |
| DVE-3 units (mol%) *1 | | 0 | 0 | 0 | 0 |
| Iodine atoms (mass%) *3 | | 0.4 | - | - | **Not** detected |
| Tg (°C) | | 0 | -10.8 | 0, -8 | 0 |
| Y1/X1 | | - | -0.6 | 0, -1 | 0 |

(continued)

|  | Ex. 9 | Ex. 10 | Ex. 11 | Ex. 12 |
|---|---|---|---|---|
| Elastic shear modulus G' (kPa) | 163 | 182 | 329 | 339 |

*1: Proportion to the total number of moles of TFE units, P units and LT-monomer units.
*2: Proportion to the total mass of TFE units, P units and LT-monomer units.
*3: Proportion to the mass of fluorinated copolymer.

The fluorinated copolymers in Ex. 1 to 5, which have the TFE units, the P units and the compound 1 units, are excellent in low temperature properties. Further, they have iodine atoms and are thereby excellent in crosslinking property.

The fluorinated copolymer in Ex. 9 is a conventional bipolymer FEPM, and is insufficient in low temperature properties.

The fluorinated copolymer in Ex. 10 is a fluorinated copolymer disclosed in Patent Document 1 and is excellent in low temperature properties, however, it has no iodine atom and is inferior in crosslinking property.

Ex. 11 is an example in which the polymerization method in Ex. 10 was changed. Two Tg were observed, and the product was a mixture of two types of fluorinated copolymers. After the termination of the polymerization, the product was not obtained in the form of a latex, the product was totally aggregated, and the latex was unstable.

Ex. 12 is an example in which iodine atoms were to be introduced to the fluorinated copolymer disclosed in Patent Document 1. The proportion of iodine atoms was the detection limit or below. Further, the rate of FAVE-6 introduced was not increased, and no improvement in low temperature properties was observed.

To 100 g of the fluorinated copolymer obtained in Ex. 1, 20 g of MT carbon (manufactured by CANCARB LIMITED, trade name: Thermax N990), 1.2 g of a crosslinking agent (manufactured by Nouryon, trade name: Perkadox 14), 5 g of a crosslinking aid (manufactured by Mitsubishi Chemical Corporation, trade name: TAIC) and 1 g of calcium stearate (manufactured by FUJIFILM Wako Pure Chemical Corporation) were added and kneaded by a twin-roll mill to obtain a composition. The composition was hot-pressed at 170°C for 20 minutes to be formed into a 100 mm × 100 mm × 1 mm sheet (primary crosslinking). Further, the sheet was heated in a gear oven at 200°C for 4 hours for secondary crosslinking to obtain a crosslinked product (crosslinked rubber sheet). From the prepared crosslinked rubber sheet, three samples were punched out by a No. 4 dumbbell, and the tensile strength and the tensile elongation were measured. The tensile strength and tensile elongation were measured in accordance with JIS K6251 (2010) at 23°C. The results are shown in Table 4.

From the fluorinated copolymers obtained in Ex. 3 and 5 also, a crosslinked product was obtained in the same manner as the copolymer in Ex. 1, and the tensile strength and the tensile elongation were measured. The results are shown in Table 4.

[Table 4]

|  | Ex. 1 | Ex. 3 | Ex. 5 |
|---|---|---|---|
| Tensile strength (MPa) | 13 | 13 | 11 |
| Tensile elongation (%) | 290 | 370 | 150 |

INDUSTRIAL APPLICABILITY

The fluorinated copolymer of the present invention is useful as a material of a composite sealing material, an O-ring, a sheet, a gasket, an oil seal, a diaphragm, a V-ring or a packing. Further, as the application of the fluorinated copolymer of the present invention, for example, a sealing member for oil drilling, a heat resistant chemical resistant sealing material, a heat resistant oil resistant sealing material, a low-temperature resistant sealing material, an electric wire covering material, a hose/tube material, a sealing material for a semiconductor apparatus, a corrosion resistant rubber coating material, and a sealing material for urea resistant grease may be mentioned.

**Claims**

1. A fluorinated copolymer which has units based on tetrafluoroethylene, units based on propylene and units based on at least one of $CF_2=CFOCF_2CF_2OCF_2OCF_2OCF_3$ and $CF_2=CFOCF_2CF_2OCF_2CF_2OCF_2CF_3$, or which has units based on vinylidene fluoride and units based on at least one of $CF_2=CFOCF_2CF_2OCF_2OCF_2OCF_3$ and $CF_2=CFOCF_2CF_2OCF_2CF_2OCF_2CF_3$, and which has either one or both of iodine atoms and bromine atoms.

2. The fluorinated copolymer according to Claim 1, which is a fluorinated copolymer which has units based on tetrafluoroethylene, units based on propylene and units based on at least one of $CF_2=CFOCF_2CF_2OCF_2OCF_2OCF_3$ and $CF_2=CFOCF_2CF_2OCF_2CF_2OCF_2CF_3$, and which has either one or both of iodine atoms and bromine atoms.

3. The fluorinated copolymer according to Claim 1 or 2, wherein to the total number of moles of the units based on tetrafluoroethylene, the units based on propylene and the units based on at least one of $CF_2=CFOCF_2CF_2OCF_2OCF_2OCF_3$ and $CF_2=CFOCF_2CF_2OCF_2CF_2OCF_2CF_3$, the proportion of the units based on tetrafluoroethylene is from 35 to 65 mol%, the proportion of the units based on propylene is from 20 to 50 mol%, and the proportion of the units based on at least one of $CF_2=CFOCF_2CF_2OCF_2OCF_2OCF_3$ and $CF_2=CFOCF_2CF_2OCF_2CF_2OCF_2CF_3$ is from 2 to 15 mol%, and

to the total mass of the units based on tetrafluoroethylene, the units based on propylene and the units based on at least one of $CF_2=CFOCF_2CF_2OCF_2OCF_2OCF_3$ and $CF_2=CFOCF_2CF_2OCF_2CF_2OCF_2CF_3$, the proportion of the units based on at least one of $CF_2=CFOCF_2CF_2OCF_2OCF_2OCF_3$ and $CF_2=CFOCF_2CF_2OCF_2CF_2OCF_2CF_3$ is from 10 to 50 mass%,
wherein the molar and mass proportions are measured by $^{19}$F-NMR analysis and $^{13}$C-NMR analysis.

4. The fluorinated copolymer according to any one of Claims 1 to 3, wherein the proportion X1 mol% of the units based on at least one of $CF_2=CFOCF_2CF_2OCF_2OCF_2OCF_3$ and $CF_2=CFOCF_2CF_2OCF_2CF_2OCF_2CF_3$ to the total number of moles of the units based on tetrafluoroethylene, the units based on propylene and the units based on at least one of $CF_2=CFOCF_2CF_2OCF_2OCF_2OCF_3$ and $CF_2=CFOCF_2CF_2OCF_2CF_2OCF_2CF_3$, and the glass transition temperature Y1 °C of the fluorinated copolymer, satisfy Y1/X1≦-0.8,

wherein the molar proportion X1 is measured by $^{19}$F-NMR analysis and $^{13}$C-NMR analysis,
wherein the glass transition temperature Y1 is a midpoint glass transition temperature measured by differential scanning calorimetry (DSC) in accordance with JIS K6240:2011.

5. The fluorinated copolymer according to any one of Claims 1 to 4, which further has units based on a monomer having at least two polymerizable unsaturated bonds.

6. The fluorinated copolymer according to Claim 1, which is a fluorinated copolymer which has units based on vinylidene fluoride and units based on at least one of $CF_2=CFOCF_2CF_2OCF_2OCF_2OCF_3$ and $CF_2=CFOCF_2CF_2OCF_2CF_2OCF_2CF_3$, and which has either one or both of iodine atoms and bromine atoms.

7. The fluorinated copolymer according to Claim 6, which further has units based on other monomer.

8. The fluorinated copolymer according to Claim 6, wherein to the total number of moles of the units based on vinylidene fluoride and the units based on at least one of $CF_2=CFOCF_2CF_2OCF_2OCF_2OCF_3$ and $CF_2=CFOCF_2CF_2OCF_2CF_2OCF_2CF_3$, the proportion of the units based on vinylidene fluoride is from 86 to 96 mol%, and the proportion of the units based on at least one of $CF_2=CFOCF_2CF_2OCF_2OCF_2OCF_3$ and $CF_2=CFOCF_2CF_2OCF_2CF_2OCF_2CF_3$ is from 4 to 14 mol%, and

to the total mass of the units based on vinylidene fluoride and the units based on at least one of $CF_2=CFOCF_2CF_2OCF_2OCF_2OCF_3$ and $CF_2=CFOCF_2CF_2OCF_2CF_2OCF_2CF_3$, the proportion of the units based on at least one of $CF_2=CFOCF_2CF_2OCF_2OCF_2OCF_3$ and $CF_2=CFOCF_2CF_2OCF_2CF_2OCF_2CF_3$ is from 10 to 50 mass%,
wherein the molar and mass proportions are measured by $^{19}$F-NMR analysis and $^{13}$C-NMR analysis.

9. The fluorinated copolymer according to any one of Claims 6 to 8, wherein the proportion X2 mol% of the units based on at least one of $CF_2=CFOCF_2CF_2OCF_2OCF_2OCF_3$ and $CF_2=CFOCF_2CF_2OCF_2CF_2OCF_2CF_3$ to the total number of moles of the units based on vinylidene fluoride, the units based on at least one of $CF_2=CFOCF_2CF_2OCF_2OCF_2OCF_3$ and $CF_2=CFOCF_2CF_2OCF_2CF_2OCF_2CF_3$, and the units based on other monomer if contained, the glass transition temperature Y2 °C of the fluorinated copolymer, and the glass transition temperature Y3 °C of a fluorinated copolymer having units constituting the fluorinated copolymer except for the units based on at least one of $CF_2=CFOCF_2CF_2OCF_2OCF_2OCF_3$ and $CF_2=CFOCF_2CF_2OCF_2CF_2OCF_2CF_3$, satisfy (Y2-Y3)/X2≦-0.8,

wherein the molar proportion X2 is measured by $^{19}$F-NMR analysis and $^{13}$C-NMR analysis,
wherein the glass transition temperatures Y2 and Y3 are midpoint glass transition temperatures measured by differential scanning calorimetry (DSC) in accordance with JIS K6240:2011.

10. The fluorinated copolymer according to Claim 7 or 9, wherein other monomer is hexafluoropropylene.

11. The fluorinated copolymer according to Claim 7 or 9, wherein other monomer is a monomer having at least two polymerizable unsaturated bonds.

12. The fluorinated copolymer according to any one of Claims 1 to 11, which has an elastic shear modulus G' of from 10 to 800 kPa,
    wherein the elastic shear modulus G' is measured in accordance with ASTM D5289 and ASTM D6204 at a temperature of 100°C at an amplitude of 0.5° at a frequency of 50 per minute.

13. The fluorinated copolymer according to any one of Claims 1 to 12, wherein the total proportion of the iodine atoms and the bromine atoms to the mass of the fluorinated copolymer is from 0.01 to 5.00 mass%,
    wherein the total proportion of the iodine atoms and the bromine atoms to the mass of the fluorinated copolymer is measured as described in the description.

14. A method for producing a fluorinated copolymer, which comprises polymerizing a monomer component containing tetrafluoroethylene, propylene and at least one of $CF_2=CFOCF_2CF_2OCF_2OCF_2OCF_3$ and $CF_2=CFOCF_2CF_2OCF_2CF_3$, or a monomer component containing vinylidene fluoride and at least one of $CF_2=CFOCF_2CF_2OCF_2OCF_3$ and $CF_2=CFOCF_2CF_2OCF_2CF_2OCF_3$,
    wherein at least one member selected from the group consisting of a monomer containing either one or both of an iodine atom and a bromine atom, and a chain transfer agent containing either one or both of an iodine atom and a bromine atom, is made to be present in the polymerization system.

15. The method for producing a fluorinated copolymer according to Claim 14, which comprises polymerizing a monomer component containing vinylidene fluoride, at least one of $CF_2=CFOCF_2CF_2OCF_2OCF_2OCF_3$ and $CF_2=CFOCF_2CF_2OCF_2CF_3$ and other monomer,
    wherein at least one member selected from the group consisting of a monomer containing either one or both of an iodine atom and a bromine atom, and a chain transfer agent containing either one or both of an iodine atom and a bromine atom, is made to be present in the polymerization system.


**Patentansprüche**

1. Fluoriertes Copolymer, welches Einheiten basierend auf Tetrafluorethylen, Einheiten basierend auf Propylen und Einheiten basierend auf mindestens einem von $CF_2=CFOCF_2CF_2OCF_2OCF_2OCF_3$ und $CF_2=CFOCF_2CF_2OCF_2CF_3$ aufweist, oder welches Einheiten basierend auf Vinylidenfluorid und Einheiten basierend auf mindestens einem von $CF_2=CFOCF_2CF_2OCF_2OCF_2OCF_3$ und $CF_2=CFOCF_2CF_2OCF_2CF_2OCF_2CF_3$ aufweist und welches entweder eines oder beides von Iodatomen und Bromatomen aufweist.

2. Fluoriertes Copolymer nach Anspruch 1, welches ein fluoriertes Copolymer ist, welches Einheiten basierend auf Tetrafluorethylen, Einheiten basierend auf Propylen und Einheiten basierend auf mindestens einem von $CF_2=CFOCF_2CF_2OCF_2OCF_2OCF_3$ und $CF_2=CFOCF_2CF_2OCF_2CF_2OCF_2CF_3$ aufweist und welches entweder eines oder beides von Iodatomen und Bromatomen aufweist.

3. Fluoriertes Copolymer nach Anspruch 1 oder 2, wobei zur Gesamtmolzahl der Einheiten basierend auf Tetrafluorethylen, der Einheiten basierend auf Propylen und der Einheiten basierend auf mindestens einem von $CF_2=CFOCF_2CF_2OCF_2OCF_2OCF_3$ und $CF_2=CFOCF_2CF_2OCF_2CF_2OCF_2CF_3$, der Anteil der Einheiten basierend auf Tetrafluorethylen 35 bis 65 Mol-% beträgt, der Anteil der Einheiten basierend auf Propylen 20 bis 50 Mol-% beträgt und der Anteil der Einheiten basierend auf mindestens einem von $CF_2=CFOCF_2CF_2OCF_2OCF_2OCF_3$ und $CF_2=CFOCF_2CF_2OCF_2CF_2OCF_2CF_3$ 2 bis 15 Mol-% beträgt, und

   zur Gesamtmasse der Einheiten basierend auf Tetrafluorethylen, der Einheiten basierend auf Propylen und der Einheiten basierend auf mindestens einem von $CF_2=CFOCF_2CF_2OCF_2OCF_2OCF_3$ und $CF_2=CFOCF_2CF_2OCF_2CF_2OCF_2CF_3$, der Anteil der Einheiten basierend auf mindestens einem von $CF_2=CFOCF_2CF_2OCF_2OCF_3$ und $CF_2=CFOCF_2CF_2OCF_2CF_2OCF_2CF_3$ 10 bis 50 Massen-% beträgt,
   wobei die Molar- und Massenanteile durch $^{19}$F-NMR-Untersuchung und $^{13}$C-NMR-Untersuchung gemessen werden.

4. Fluoriertes Copolymer nach einem der Ansprüche 1 bis 3, wobei das Verhältnis X1 Mol-% der Einheiten basierend auf mindestens einem von $CF_2=CFOCF_2CF_2OCF_2OCF_2OCF_3$ und $CF_2=CFOCF_2CF_2OCF_2CF_2OCF_2CF_3$ zur Gesamtmolzahl der Einheiten basierend auf Tetrafluorethylen, der Einheiten basierend auf Propylen und der Einheiten basierend auf mindestens einem von $CF_2=CFOCF_2CF_2OCF_2OCF_2OCF_3$ und $CF_2=CFOCF_2CF_2OCF_2C$-$F_2OCF_2CF_3$, und der Glasübergangstemperatur Y1 °C des fluorierten Copolymers Y1/X1≦-0,8 erfüllen,

wobei der molare Anteil X1 durch $^{19}$F-NMR-Untersuchung und $^{13}$C-NMR-Untersuchung gemessen wird,
wobei die Glasübergangstemperatur Y1 eine durch Dynamische Differenzkalorimetrie (DSC) gemäß JIS K6240:2011 gemessene Mittelpunkt-Glasübergangstemperatur ist.

5. Fluoriertes Copolymer nach einem der Ansprüche 1 bis 4, welches weiter Einheiten basierend auf einem Monomer mit mindestens zwei polymerisierbaren ungesättigten Bindungen aufweist.

6. Fluoriertes Copolymer nach Anspruch 1, welches ein fluoriertes Copolymer ist, welches Einheiten basierend auf Vinylidenfluorid und Einheiten basierend auf mindestens einem von $CF_2=CFOCF_2CF_2OCF_2OCF_2OCF_3$ und $CF_2=CFOCF_2CF_2OCF_2CF_2OCF_2CF_3$ aufweist, und welches entweder eines oder beides von Iodatomen und Bromatomen aufweist.

7. Fluoriertes Copolymer nach Anspruch 6, welches weiter Einheiten basierend auf anderem Monomer aufweist.

8. Fluoriertes Copolymer nach Anspruch 6, wobei zur Gesamtmolzahl der Einheiten basierend auf Vinylidenfluorid und der Einheiten basierend auf mindestens einem von $CF_2=CFOCF_2CF_2OCF_2OCF_2OCF_3$ und $CF_2=CFOCF_2C$-$F_2OCF_2CF_2OCF_2CF_3$, der Anteil der Einheiten basierend auf Vinylidenfluorid 86 bis 96 Mol-% beträgt und der Anteil der Einheiten basierend auf mindestens einem von $CF_2=CFOCF_2CF_2OCF_2OCF_2OCF_3$ und $CF_2=CFOCF_2C$-$F_2OCF_2CF_2OCF_2CF_3$ 4 bis 14 Mol-% beträgt, und

zur Gesamtmasse der Einheiten basierend auf Vinylidenfluorid und der Einheiten basierend auf mindestens einem von $CF_2=CFOCF_2CF_2OCF_2OCF_2OCF_3$ und $CF_2=CFOCF_2CF_2OCF_2CF_2OCF_2CF_3$, der Anteil der Einheiten basierend auf mindestens einem von $CF_2=CFOCF_2CF_2OCF_2OCF_2OCF_3$ und $CF_2=CFOCF_2CF_2OCF_2C$-$F_2OCF_2CF_3$ 10 bis 50 Massen-% beträgt,
wobei die Molar- und Massenanteile durch $^{19}$F-NMR-Untersuchung und $^{13}$C-NMR-Untersuchung gemessen werden.

9. Fluoriertes Copolymer nach einem der Ansprüche 6 bis 8, wobei das Verhältnis X2 Mol-% der Einheiten basierend auf mindestens einem von $CF_2=CFOCF_2CF_2OCF_2OCF_2OCF_3$ und $CF_2=CFOCF_2CF_2OCF_2CF_2OCF_2CF_3$ zur Gesamtmolzahl der Einheiten basierend auf Vinylidenfluorid, der Einheiten basierend auf mindestens einem von $CF_2=CFOCF_2CF_2OCF_2OCF_2OCF_3$ und $CF_2=CFOCF_2CF_2OCF_2CF_2OCF_2CF_3$, und der Einheiten basierend auf anderem Monomer, falls enthalten, der Glasübergangstemperatur Y2 °C des fluorierten Copolymers und der Glasübergangstemperatur Y3 °C eines fluorierten Copolymers mit Einheiten, die das fluorierte Copolymer mit Ausnahme der Einheiten basierend auf mindestens einem von $CF_2=CFOCF_2CF_2OCF_2OCF_2OCF_3$ und $CF_2=CFOCF_2CF_2OCF_2CF_2OCF_2CF_3$ ausmachen, (Y2-Y3)/X2≦-0,8 erfüllen,

wobei der molare Anteil X2 durch $^{19}$F-NMR-Untersuchung und $^{13}$C-NMR-Untersuchung gemessen wird,
wobei die Glasübergangstemperaturen Y2 und Y3 durch Dynamische Differenzkalorimetrie (DSC) gemäß JIS K6240:2011 gemessene Mittelpunkt-Glasübergangstemperaturen sind.

10. Fluoriertes Copolymer nach Anspruch 7 oder 9, wobei das andere Monomer Hexafluorpropylen ist.

11. Fluoriertes Copolymer nach Anspruch 7 oder 9, wobei das andere Monomer ein Monomer mit mindestens zwei polymerisierbaren ungesättigten Bindungen ist.

12. Fluoriertes Copolymer nach einem der Ansprüche 1 bis 11, welches einen elastischen Schermodul G' von 10 bis 800 kPa aufweist,
wobei der elastische Schermodul G' gemäß ASTM D5289 und ASTM D6204 bei einer Temperatur von 100°C bei einer Amplitude von 0,5° bei einer Frequenz von 50 pro Minute gemessen wird.

13. Fluoriertes Copolymer nach einem der Ansprüche 1 bis 12, wobei der Gesamtanteil der Iodatome und der Bromatome zur Masse des fluorierten Copolymers von 0,01 bis 5,00 Massen-% beträgt,

wobei der Gesamtanteil der Iodatome und der Bromatome zur Masse des fluorierten Copolymers wie in der Beschreibung beschrieben gemessen wird.

14. Verfahren zum Herstellen eines fluorierten Copolymers, welches Polymerisation einer Monomerkomponente, enthaltend Tetrafluorethylen, Propylen und mindestens eines von $CF_2=CFOCF_2CF_2OCF_2OCF_2OCF_3$ und $CF_2=CFOCF_2CF_2OCF_2CF_2OCF_2CF_3$, oder eine Monomerkomponente, enthaltend Vinylidenfluorid und mindestens eines von $CF_2=CFOCF_2CF_2OCF_2OCF_2OCF_3$ und $CF_2=CFOCF_2CF_2OCF_2CF_2OCF_2CF_3$ umfasst,
wobei mindestens ein Mitglied, ausgewählt aus der Gruppe, bestehend aus einem Monomer, enthaltend entweder eines oder beides von einem Iodatom und einem Bromatom, und einem Kettenübertragungsmittel, enthaltend entweder eines oder beides von einem Iodatom und einem Bromatom, in dem Polymerisationssystem vorhanden gemacht wird.

15. Verfahren zum Herstellen eines fluorierten Copolymers nach Anspruch 14, welches Polymerisation einer Monomerkomponente, enthaltend Vinylidenfluorid, mindestens eines von $CF_2=CFOCF_2CF_2OCF_2OCF_2OCF_3$ und $CF_2=CFOCF_2CF_2OCF_2CF_2OCF_2CF_3$ und ein anderes Monomer, umfasst,
wobei mindestens ein Mitglied, ausgewählt aus der Gruppe, bestehend aus einem Monomer, enthaltend entweder eines oder beides von einem Iodatom und einem Bromatom, und einem Kettenübertragungsmittel, enthaltend entweder eines oder beides von einem Iodatom und einem Bromatom, in dem Polymerisationssystem vorhanden gemacht wird.

## Revendications

1. Copolymère fluoré qui a des unités basées sur du tétrafluoroéthylène, des unités basées sur du propylène et des unités basées sur au moins un de $CF_2=CFOCF_2CF_2OCF_2OCF_2OCF_3$ et $CF_2=CFOCF_2CF_2OCF_2CF_2OCF_2CF_3$, ou qui a des unités basées sur du fluorure de vinylidène et des unités basées sur au moins un de $CF_2=CFOCF_2CF_2OCF_2OCF_2OCF_3$ et $CF_2=CFOCF_2CF_2OCF_2CF_2OCF_2CF_3$, et qui a l'un ou l'autre d'atomes d'iode et d'atomes de brome ou les deux.

2. Copolymère fluoré selon la revendication 1, qui est un copolymère fluoré qui a des unités basées sur du tétrafluoroéthylène, des unités basées sur du propylène et des unités basées sur au moins un de $CF_2=CFOCF_2CF_2OCF_2OCF_2OCF_3$ et $CF_2=CFOCF_2CF_2OCF_2CF_2OCF_2CF_3$, et qui a l'un ou l'autre d'atomes d'iode et d'atomes de brome ou les deux.

3. Copolymère fluoré selon la revendication 1 ou 2, dans lequel sur le nombre total de moles des unités basées sur du tétrafluoroéthylène, des unités basées sur du propylène et des unités basées sur au moins un de $CF_2=CFOCF_2CF_2OCF_2OCF_2OCF_3$ et $CF_2=CFOCF_2CF_2OCF_2CF_2OCF_2CF_3$, la proportion des unités basées sur du tétrafluoroéthylène va de 35 à 65 % en mole, la proportion des unités basées sur du propylène va de 20 à 50 % en mole et la proportion des unités basées sur au moins un de $CF_2=CFOCF_2CF_2OCF_2OCF_2OCF_3$ et $CF_2=CFOCF_2CF_2OCF_2CF_2OCF_2CF_3$ va de 2 à 15 % en mole, et

sur la masse totale des unités basées sur du tétrafluoroéthylène, des unités basées sur du propylène et des unités basées sur au moins un de $CF_2=CFOCF_2CF_2OCF_2OCF_2OCF_3$ et $CF_2=CFOCF_2CF_2OCF_2CF_2OCF_2CF_3$, la proportion des unités basées sur au moins un de $CF_2=CFOCF_2CF_2OCF_2OCF_2OCF_3$ et $CF_2=CFOCF_2CF_2OCF_2CF_2OCF_2CF_3$ va de 10 à 50 % en masse,
dans lequel les proportions molaires et massiques sont mesurées par analyse RMN $^{19}$F et analyse RMN [13]C.

4. Copolymère fluoré selon l'une quelconque des revendications 1 à 3, dans lequel la proportion X1 % en mole des unités basées sur au moins un de $CF_2=CFOCF_2CF_2OCF_2OCF_2OCF_3$ et $CF_2=CFOCF_2CF_2OCF_2CF_2OCF_2CF_3$ sur le nombre total de moles des unités basées sur du tétrafluoroéthylène, des unités basées sur du propylène et des unités basées sur au moins un de $CF_2=CFOCF_2CF_2OCF_2OCF_2OCF_3$ et $CF_2=CFOCF_2CF_2OCF_2CF_2OCF_2CF_3$, et la température de transition vitreuse Y1 °C du copolymère fluoré satisfont Y1/X1≤-0,8,

dans lequel la proportion molaire X1 est mesurée par analyse RMN $^{19}$F et analyse RMN $^{13}$C,
dans lequel la température de transition vitreuse Y1 est une température de transition vitreuse au point médian mesurée par analyse calorimétrique différentielle (ACD) conformément à JIS K6240 : 2011.

5. Copolymère fluoré selon l'une quelconque des revendications 1 à 4, qui a en outre des unités basées sur un monomère ayant au moins deux liaison insaturées polymérisables.

6. Copolymère fluoré selon la revendication 1, qui est un copolymère fluoré qui a des unités basées sur du fluorure de vinylidène et des unités basées sur au moins un de $CF_2=CFOCF_2CF_2OCF_2OCF_2OCF_3$ et $CF_2=CFOCF_2CF_2OCF_2CF_3$, et qui a l'un ou l'autre d'atomes d'iode et d'atomes de brome ou les deux.

7. Copolymère fluoré selon la revendication 6, qui a en outre des unités basées sur un autre monomère.

8. Copolymère fluoré selon la revendication 6, dans lequel sur le nombre total de moles des unités basées sur du fluorure de vinylidène et des unités basées sur au moins un de $CF_2=CFOCF_2CF_2OCF_2OCF_2OCF_3$ et $CF_2=CFOCF_2CF_2OCF_2CF_3$, la proportion des unités basées sur du fluorure de vinylidène va de 86 à 96 % en mole et la proportion des unités basées sur au moins un de $CF_2=CFOCF_2CF_2OCF_2OCF_2OCF_3$ et $CF_2=CFOCF_2CF_2OCF_2CF_3$ va de 4 à 14 % en mole, et

sur la masse totale des unités basées sur du fluorure de vinylidène et des unités basées sur au moins un de $CF_2=CFOCF_2CF_2OCF_2OCF_2OCF_3$ et $CF_2=CFOCF_2CF_2OCF_2CF_2OCF_3$, la proportion des unités basées sur au moins un de $CF_2=CFOCF_2CF_2OCF_2OCF_2OCF_3$ et $CF_2=CFOCF_2CF_2OCF_2CF_2OCF_3$ va de 10 à 50 % en masse,
dans lequel les proportions molaires et massiques sont mesurées par analyse RMN $^{19}F$ et analyse RMN $^{13}C$.

9. Copolymère fluoré selon l'une quelconque des revendications 6 à 8, dans lequel la proportion X2 % en mole des unités basées sur au moins un de $CF_2=CFOCF_2CF_2OCF_2OCF_2OCF_3$ et $CF_2=CFOCF_2CF_2OCF_2CF_2OCF_3$ sur le nombre total de moles des unités basées sur du fluorure de vinylidène, des unités basées sur au moins un de $CF_2=CFOCF_2CF_2OCF_2OCF_2OCF_3$ et $CF_2=CFOCF_2CF_2OCF_2CF_2OCF_3$ et des unités basées sur un autre monomère le cas échéant, la température de transition vitreuse Y2 °C du copolymère fluoré et la température de transition vitreuse Y3 °C d'un copolymère fluoré ayant des unités constituant le copolymère fluoré à l'exception des unités basées sur au moins un de $CF_2=CFOCF_2CF_2OCF_2OCF_2OCF_3$ et $CF_2=CFOCF_2CF_2OCF_2CF_2OCF_3$ satisfont $(Y2-Y3)/X2 \leq -0,8$,

dans lequel la proportion molaire X2 est mesurée par analyse RMN $^{19}F$ et analyse RMN $^{13}C$,
dans lequel les températures de transition vitreuse Y2 et Y3 sont des températures de transition vitreuse au point médian mesurées par analyse calorimétrique différentielle (ACD) conformément à JIS K6240 : 2011.

10. Copolymère fluoré selon la revendication 7 ou 9, dans lequel l'autre monomère est l'hexafluoropropylène.

11. Copolymère fluoré selon la revendication 7 ou 9, dans lequel l'autre monomère est un monomère ayant au moins deux liaisons insaturées polymérisables.

12. Copolymère fluoré selon l'une quelconque des revendications 1 à 11, qui a un module de cisaillement élastique G' allant de 10 à 800 kPa,
dans lequel le module de cisaillement élastique G' est mesuré conformément à ASTM D5289 et ASTM D6204 à une température de 100 °C à une amplitude de 0,5° à une fréquence de 50 par minute.

13. Copolymère fluoré selon l'une quelconque des revendications 1 à 12, dans lequel la proportion totale des atomes d'iode et des atomes de brome sur la masse du copolymère fluoré va de 0,01 à 5,00 % en masse,
dans lequel la proportion totale des atomes d'iode et des atomes de brome sur la masse du copolymère fluoré est mesurée tel que décrit dans la description.

14. Procédé de production d'un copolymère fluoré, qui comprend polymériser un composant monomère contenant du tétrafluoroéthylène, du propylène et au moins un de $CF_2=CFOCF_2CF_2OCF_2OCF_2OCF_3$ et $CF_2=CFOCF_2CF_2OCF_2CF_3$, ou un composant monomère contenant du fluorure de vinylidène et au moins un de $CF_2=CFOCF_2CF_2OCF_2OCF_2OCF_3$ et $CF_2=CFOCF_2CF_2OCF_2CF_2OCF_3$,
dans lequel au moins un élément sélectionné parmi le groupe constitué d'un monomère contenant l'un ou l'autre d'un atome d'iode et d'un atome de brome ou les deux, et d'un agent de transfert de chaîne contenant l'un ou l'autre d'un atome d'iode et d'un atome de brome ou les deux, est amené à être présent dans le système de polymérisation.

15. Procédé de production d'un copolymère fluoré selon la revendication 14, qui comprend polymériser un composant monomère contenant du fluorure de vinylidène, au moins un de $CF_2=CFOCF_2CF_2OCF_2OCF_3$ et

$CF_2=CFOCF_2CF_2OCF_2CF_2OCF_2CF_3$ et un autre monomère,
dans lequel au moins un élément sélectionné parmi le groupe constitué d'un monomère contenant l'un ou l'autre d'un atome d'iode et d'un atome de brome ou les deux, et d'un agent de transfert de chaîne contenant l'un ou l'autre d'un atome d'iode et d'un atome de brome ou les deux, est amené à être présent dans le système de polymérisation.

**EP 3 858 875 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5407180 B
- WO 2007085545 A1
- WO 0056694 A